# EUROPEAN PATENT SPECIFICATION

(11) **EP 2 876 781 B1**
(45) Date of publication and mention of the grant of the patent: **25.04.2018**
(21) Application number: 13194013.2
(22) Date of filing: 22.11.2013
(51) Int. Cl.: H02K 1/20, H02K 1/32

(54) **Electrical machine with improved cooling**
Elektrische Maschine mit verbesserter Kühlung
Machine électrique à refroidissement amélioré

(43) Date of publication of application: 27.05.2015
(73) Proprietor: GE Renewable Technologies, 38100 Grenoble (FR)
(72) Inventor: Granitzer, Christopher, 2340 Moedling (AT); Baumeister, Stefan, 79790 Kuessaberg (DE)
(74) Representative: General Electric Technology GmbH

(56) References cited:
- EP-A2- 2 587 639
- DE-C- 103 236
- DE-C- 136 878
- JP-U- S6 430 645

## Description

### TECHNICAL FIELD

The electric machine is in particular a rotating electric machine such as a synchronous generator to be connected to a gas or steam turbine (Turbogenerator) or a synchronous generator to be connected to a hydro turbine (hydro generator) or an asynchronous generator or a synchronous or asynchronous electric motor or also other types of electric machines.
The present disclosure relates to an electrical machine, and more in particular it relates to a component thereof. The electric machine is in particular a rotating electric machine such as a synchronous generator to be connected to a gas or steam turbine (turbo generator) or a synchronous generator to be connected to a hydro turbine (hydro generator) or an asynchronous generator or a synchronous or asynchronous electric motor or also other types of electric machines.

DE 103236 C describes distance plates for machine anchors with cavities between the plates for ventilation.

EP 2587639 A2 describes an electrical machine stator that includes a stack of laminations configured to be assembled together. Nesting features are disposed between the laminations to improve the structural stiffness of the stator.

JPS 6430645 U describes a chemical composition to enhance the heat resistance.

DE 136878 C describes the ventilation of anchors sheets by means of ventilation sheets which have bosses or taps to ensure the distance between the sheet packs.

### BACKGROUND

At air cooled generators, in particular hydro generators, all incidental losses have to be transferred via convection to the cooling air. A certain amount of cooling air and a defined distribution is needed to keep the temperature of the machine below the critical temperature level.
To ensure that the volume flow can circulate through the machine, in some parts of the machine (e.g. in the stator core (including yoke) and rotor rim for asynchronous machines) cooling ducts are needed. In the stacked parts of the machine the ducts are generally created by distance pieces between the sheet metals.
However, an important amount of distance keepers are needed to create the ventilation ducts. All of them have to be fixed on the sheet metal. This is needed for mounting them and to avoid unwished movement during operation. Especially on the rotor side, due to centrifugal forces, the fixation can be challenging, established by form closure.
Creating the ducts with distance pieces entails a lot of additional parts and work.

### SUMMARY

It is an object of the present invention to overcome said disadvantages with reference to the state of the art providing a component for an electrical machine as substantially defined in independent claim 1.
It is a further object of the present invention to provide an electrical machine as substantially defined in dependent claim 12.
As it will appear clear from the detailed description of some exemplary, and not limiting, embodiments of the invention, the aforementioned distance pieces are replaced by deformed sheet metals.
This provides the advantageous technical effects of a reduced number of single parts; no additional individual production step for mounting the distance pieces on the sheet metal; no danger that single parts detach during mounting or operation and an improved stiffness of the structure.
Furthermore, a three dimensional design allows the possibility of locally varying the mechanical stiffness, which also implies that non homogeneous structures could also be implemented.
Depending on the shape of the deformed sheet metals, the surface in contact to the cooling air can be increased. This leads to a better cooling.

### BRIEF DESCRIPTION OF THE DRAWINGS

The foregoing objects and many of the attendant advantages of this invention will become more readily appreciated as the same becomes better understood by reference to the following detailed description when taken in conjunction with the accompanying drawings, wherein:
Fig. 1 is a prospective view of a component for an electrical machine comprising a plurality of stacked laminations according to the prior art;
Fig. 2 is radial section of the component of Fig. 1;
Fig. 3 is a prospective view of a first preferred embodiment of a component for an electrical machine according to the present invention;
Fig. 4 is a prospective view of a second preferred embodiment of a component for an electrical machine according to the present invention;
Fig. 5 is a prospective view of a third preferred embodiment of a component for an electrical machine according to the present invention;
Fig. 6 is a prospective view of a forth preferred embodiment of a component for an electrical machine according to the present invention;
Fig. 7 shows a particular of the component of Fig. 6; and
Fig. 8 is a prospective view of a fifth preferred embodiment of a component for an electrical machine according to the present invention.

### DETAILED DESCRIPTION OF EXEMPLARY EMBODIMENTS

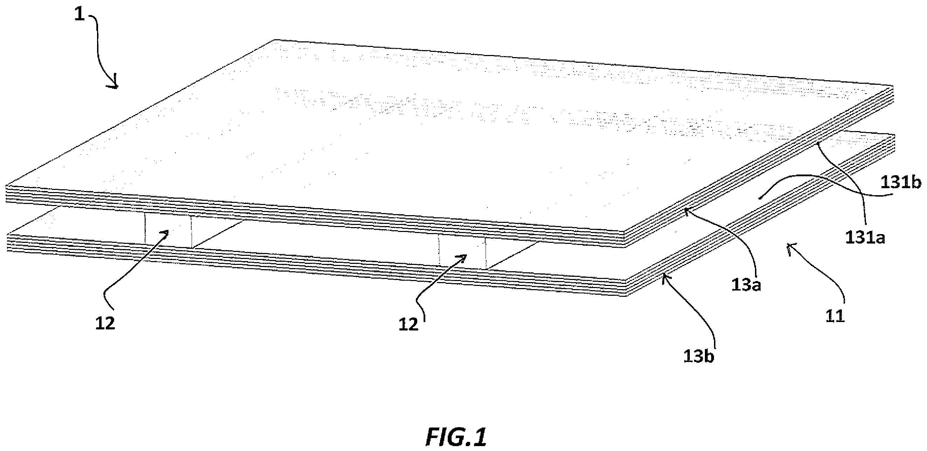

With now reference to Figure 1, it is illustrated a component for an electrical machine 1 according to the prior art. The component 1 comprises a plurality of stacked laminations 11, which are generally used to assemble stator cores or used to for forming poles mounted on the rotor. The stacked laminations 11, in order to satisfy the important need of providing a suitable cooling system therein, comprise distance means in the form of longitudinal elements, schematically represented in the figure and denoted with reference 12, which are usually welded between a pair of adjacent stacks 13a and 13b. In particular, distance means 12 is welded on a top lamination 131b of the stack 13b and on a bottom lamination 131a of the stack 13a to create a separation between the stack, thus allowing a cooling fluid to flow therein and provide heat removal.
It will be appreciated that lamination stack 11 may comprise a plurality of layers of adjacent lamination stacks, in pair separated by welded distance means as explained above. The amount of stacks assembled will vary depending on the particular machine to manufacture based on the required power to be supplied.
As stated above, the assembly of such component, because of the presence of welded distance means, requires great effort because the welding procedure requires time and also has to be operated properly. In fact, it is of paramount importance avoiding the movement of the welded spacers while the machine is in use, especially for the ones mounted on the rotor where important centrifugal forces are involved during operation.

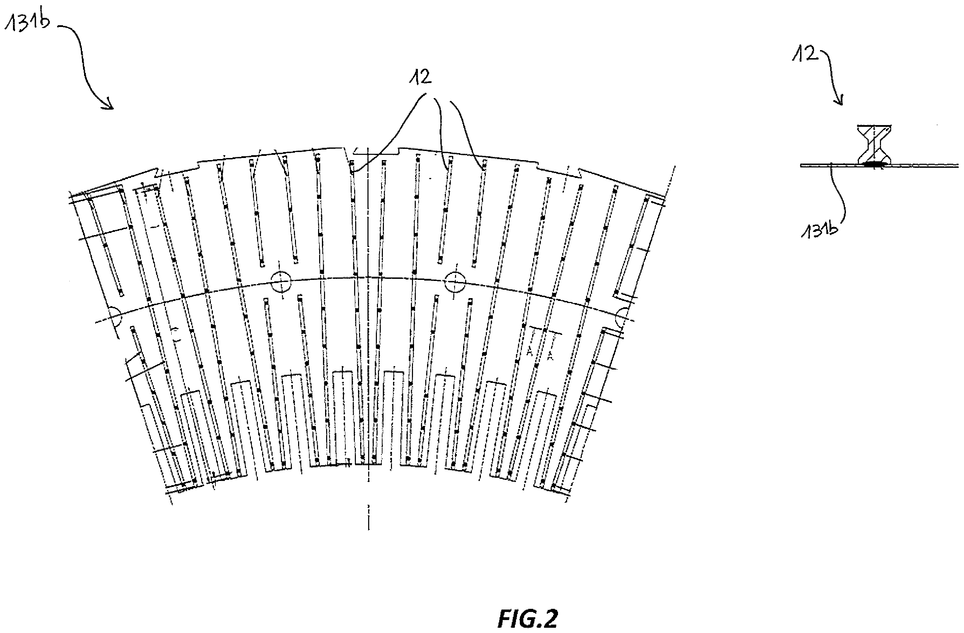

Figure 2 shows a planar view of the top lamination 131b as described above. The figure shows longitudinal elements 12 welded on the surface of the lamination 131b creating separation between the latter and the opposed lamination (not shown).

Figure 2A shows an axial section of the longitudinal element 12.

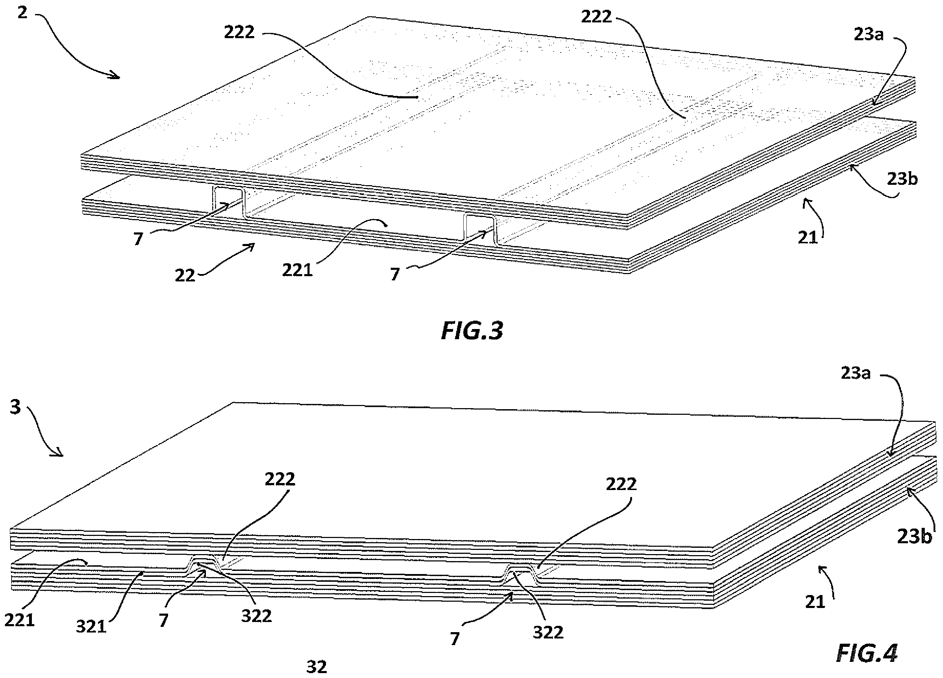

With now reference to the next Figure 3, it is shown a prospective view of a component 2 according to a first preferred embodiment of the present invention.
The component 2 comprises a plurality of stacked laminations 21. In particular, the component 2 comprises a corrugated layer 22 which is interposed between a pair of adjacent stacks 23a and 23b. As clearly visible in the figure, the corrugated layer 22 provides a separation means between the stacks 23a and 23b. This way, a plurality of passageways 7 are formed between the stacks 23a and 23b for the passage of a cooling fluid, when the rotating machine is assembled and in operation.
Preferably, the corrugated layer comprises a first lamination 221, positioned on top of the stack 23b, which is deformed in such a way to define on its surface first recesses 222. Preferably, first recesses 222 are in the form of longitudinal ducts, having a rectangular section. Other shapes may also be considered, like a trapezoidal one.
Different process may be chosen for acquiring the first recesses 222 on the first lamination 221. An advantageous one is the forming process, in particular hydroforming. Hydroforming process allows the formation of particular shapes on ductile metals such as aluminum, brass or stainless steel by insertion of the laminate in a chamber comprising a mold and an aperture for the injection of a fluid. High pressure hydraulic pumps then inject fluid at high pressure inside the chamber which causes the laminate to expand until it matches the mold. Such process is generally used in the automotive industry. As this process is known in the art, it won't be herewith further described.

With now reference to the following Figure 4, it is shown a component 3 according to a second preferred embodiment of the invention.
Similarly, the component 3 comprises the plurality of stacked lamination 21 comprising a pair of adjacent lamination stacks 23a and 23b. A corrugated layer 32 is interposed there between by means of lamination 221 deformed in such a way to obtain first recesses 222. The corrugated layer 32 defines passageways 7 for the coolant fluid. The first recesses 222 are in this example in the form in longitudinal ducts, having in this embodiment a trapezoidal section. It will be appreciated that a rectangular section could be used instead.
In such embodiment, the corrugated layer 32 comprises a second lamination, indicated in the figure with numeral reference 321, disposed adjacent to the first lamination and deformed as well in such a way to define on its surface a plurality of second recesses 322. Advantageously, recesses 222 and 322 have identical sections. First and second laminations 221 and 321 are disposed such that first and second recesses 222 and 322 have aligned convexities and such that each second recess 322 is at least partially hosted into a correspondent first recess 222.
This configuration is particularly advantageous because it strengthens the mechanical stiffness and stability of the stacked lamination, especially in correspondence of the channels for the passage of cooling fluid.
Moreover, the choice of trapezoidal section for the ducts formed on the lamination is particularly preferred as such section assures a minor mechanical stress on the material, which then guarantees a more reliable behaviour while in operation.

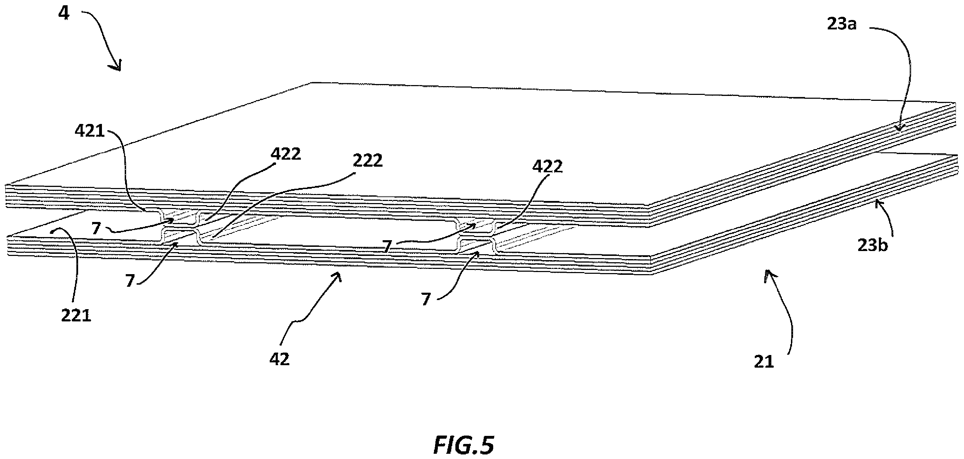

With reference to Figure 5, it is shown a third preferred embodiment of the component according to the invention, denoted with numeral 4. Similarly, the component 4 comprises a pair of adjacent stacks 23a and 23b and a corrugated layer 42. The corrugated layer 42 comprises the first lamination 221 disposed on top of the stack 23b deformed as to define first recesses 222 having a form of longitudinal ducts (in this example having a substantially rectangular section).
In this third preferred embodiment, the corrugated layer comprises a third lamination 421, in turn deformed in a way to define on its surface third recesses 422. In this example as well, first and third recesses have identical sections. However, first lamination 221 is opposite with respect to third lamination 421 and disposed such that first and third recesses 222 and 422 have opposite convexities and each first recess abuts on a correspondent third recess.
This configuration is particularly advantageous because it assures a homogeneous distribution of the pressures involved in the lamination stacks during operation.
It will be appreciated that also various combinations of preferred embodiments may be carried out. For example, the third embodiment may have first recesses 222 formed by a couple of laminations disposed as taught with reference to the second embodiment.

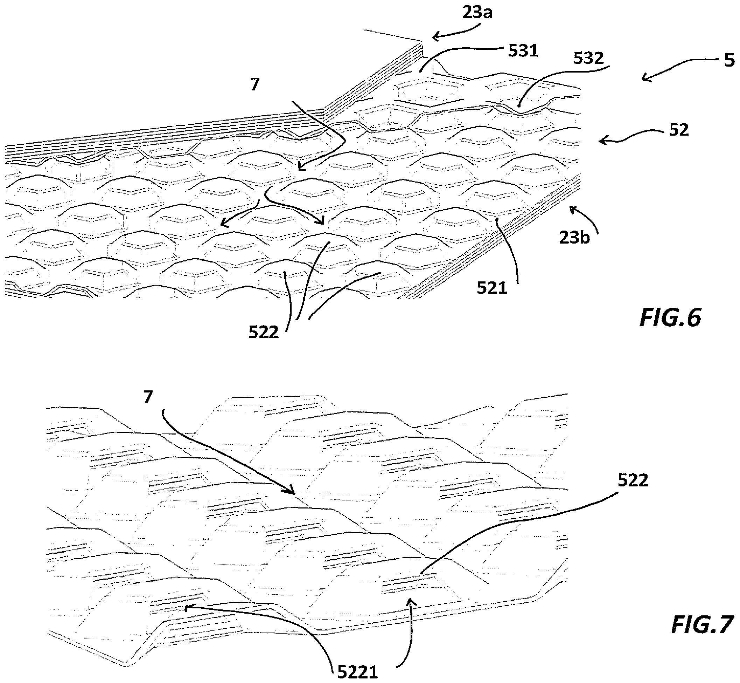

Making now reference to next Figure 6, it is shown a component 5 according to a forth embodiment of the present invention.
Similarly, the component 5 comprises a pair of adjacent stacks 23a and 23b and a corrugated layer 52. This embodiment differs from the preceding ones in the fact that on a first lamination 521 the recesses are in the form of a plurality of dimples, indicated in the figure with the reference number 522.
Advantageously, by means of the presence of dimples passageways 7 are configured as a plurality of possible paths which the fluid can pass through.
It will be appreciated that preferred features of preceding preferred embodiments are applicable mutatis mutandis to the forth embodiment.
More in particular, the corrugated layer 52 may comprise a second lamination 531 opposite to the first lamination 521, the two laminations having correspondent dimples disposed with opposite convexities such that each dimple of the first lamination 521 abuts on a correspondent dimple 532, formed on second lamination 531.
Furthermore, each dimple on the stack may be formed by two laminations as described, mutatis mutandis, concerning second embodiment.

Advantageously, as detailed in next Figure 7, each dimple may be hollow inside and comprise an opening 5221 configured to allow passage of the cooling fluid inside the dimple. This way, the surface for the heat exchange is greatly increased, thus greatly improving the process of heat removal.

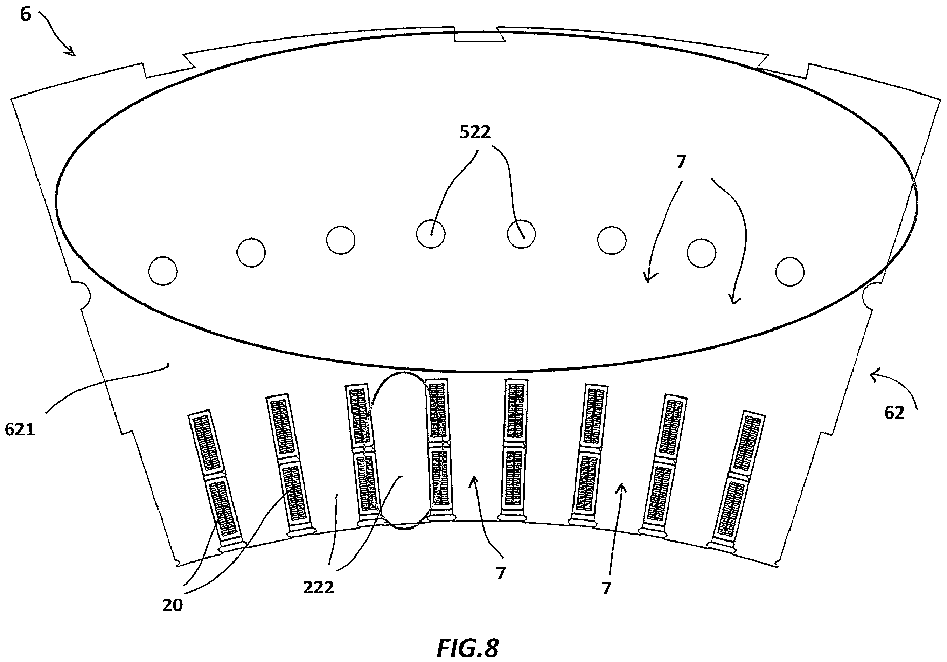

With reference to the final Figure 8, it is shown a fifth last embodiment which is a combination of all the embodiments above described. In particular, Figure 8 illustrates a planar view of a corrugated layer 62 comprising a lamination 621 including a top portion having recesses in the form of a plurality of dimples, and lower portions characterized by recesses 222 in the form of longitudinal ducts.
This combination of embodiments results to be extremely effective for the following reasons: the dimples are advantageous because, differently from longitudinal ducts, they don't provide preferred passageways for the flow of the cooling fluid but rather a plurality of possible channels where the fluid can be distributed. However, in the lower portion of the lamination the presence of windings 20 cause a reduction of the available space for forming dimples, and therefore the formation longitudinal ducts completes the distribution of recesses on the lamination. This way it is assured a total coverage of the lamination for establishing the corrugated layer and thus a highly effective passage of cooling fluid for heat removal.
It will also be appreciated that the fluid is not restricted to air only. By means of the use of components according to the present invention, water cooled heat exchangers integrated in the deformed laminations are also possible. The invention conceived in this manner is susceptible to numerous modifications and variants, all falling within the scope of the following claims. Moreover all details can be replaced by technically equivalent elements.
In practice the materials used and the dimensions can be chosen according to requirements and to the state of the art.

## Claims

1. A component (2, 3, 4, 5, 6) for an electrical machine comprising a plurality of stacked laminations (21), with at least a corrugated layer (22, 32, 42, 52, 62) interposed between a pair of adjacent stacks (23a, 23b), such that said pair of adjacent stacks (23a, 23b) are spaced apart and such that a plurality of passageways (7) for a cooling fluid are formed there between, the corrugated layer (22, 32, 42, 52, 62) comprises a first lamination (221, 521, 621) deformed in such a way to define on its surface a plurality of first recesses (222, 522), the corrugated layer (32, 42, 52, 62) comprises a second lamination (321, 421, 531) being deformed in such a way to define on its surface a plurality of second recesses (322, 422, 532) **characterized in that** said first and second recesses (222, 322) have aligned concavities, said second lamination (321) being disposed adjacent to said first lamination (221) such that each second recess (322) is at least partially hosted into a correspondent first recess (222).

2. A component (4, 5) for an electrical machine comprising a plurality of stacked laminations (21), with at least a corrugated layer (42, 52) interposed between a pair of adjacent stacks (23a, 23b), such that said pair of adjacent stacks (23a, 23b) are spaced apart and such that a plurality of passageways (7) for a cooling fluid are formed there between, the corrugated layer (42, 52) comprises a first lamination (221, 521) deformed in such a way to define on its surface a plurality of first recesses (222, 522), the corrugated layer (42, 52) comprises a third lamination (421, 531) being deformed in such a way to define on its surface a plurality of third recesses (422, 532), **characterized in that** said first and third recesses (222, 422, 532) have opposite convexities, said third lamination (421, 521) being disposed opposite to said first lamination (221, 521) such that each third recess (422, 532) abuts on a correspondent first recess (222, 522).

3. A component (2, 3, 4, 5, 6) for an electrical machine according to claim 1, **characterized in that** said corrugated layer (42, 52) further comprising a third lamination (421, 521) deformed in such a way to define on its surface a plurality of third recesses (422, 532), wherein said third and first recesses (422, 532; 222, 522) have opposite convexities, said third lamination (421, 521) being disposed opposite to said first lamination (221, 521) such that said each third recess (422, 532) abuts on a correspondent first recess (222, 522).

4. The component (2, 3, 4, 6) according to the preceding claim, wherein said recesses (222, 322, 422) comprise longitudinal ducts (222, 322, 422).

5. The component (2, 3, 4, 6) according to the preceding claim, wherein said longitudinal ducts (222, 322, 422) have a substantially rectangular and/or trapezoidal section.

6. The component (5, 6) according to claim 3, wherein the recesses (522, 532) comprise dimples (522, 532).

7. The component (5, 6) according to the preceding claim, where each dimple (522, 532) is hollow and comprises an opening (5221), the opening (5221) being configured to allow passage of the cooling inside said dimple (522, 532).

8. The component (2, 3, 4, 5, 6) according to any of the preceding claims, wherein said corrugated layer (22, 32, 42, 52, 62) is obtained by a forming process.

9. The component (2, 3, 4, 5, 6) according to the preceding claims, wherein the forming process is a hydroforming process.

10. An electrical machine, **characterized in that** it comprises a component (2, 3, 4, 5, 6) according to any of the preceding claims.

## Patentansprüche

1. Eine Komponente (2, 3, 4, 5, 6) für eine elektrische Maschine, umfassend eine Mehrzahl von gestapelten Lamellen (21), wobei mindestens eine gewellte Schicht (22, 32, 42, 52, 62) zwischen einem Paar benachbarter Stapel (23a, 23b) angeordnet ist, so dass das Paar von benachbarten Stapeln (23a, 23b) beabstandet ist, und so, dass eine Mehrzahl von Durchgängen (7) für ein Kühlfluid zwischen ihnen gebildet ist, wobei die gewellte Schicht (22, 32, 42, 52, 62) eine erste Lamelle (221, 521, 621) umfasst, die in einer solchen Weise verformt ist, dass auf ihrer Oberfläche eine Mehrzahl von ersten Einbuchtungen (222, 522) gebildet ist, wobei die gewellte Schicht (32, 42, 52, 62) eine zweite Lamelle (321, 421, 531) umfasst, die in einer solchen Weise verformt ist, dass auf ihrer Oberfläche eine Mehrzahl von zweiten Einbuchtungen (322, 422, 532) gebildet ist,
**dadurch gekennzeichnet, dass** die ersten und zweiten Einbuchtungen (222, 322) ausgerichtete Konkavitäten aufweisen, wobei die zweite Lamelle (321) benachbart zu der ersten Lamelle (221) angeordnet ist, so dass jede zweite Einbuchtung (322) mindestens teilweise in einer entsprechenden ersten Einbuchtung (222) aufgenommen wird.

2. Eine Komponente (4, 5) für eine elektrische Maschine, umfassend eine Mehrzahl von gestapelten Lamellen (21), wobei mindestens eine gewellte Schicht (42, 52) zwischen einem Paar benachbarter Stapel (23a, 23b) angeordnet ist, so dass das Paar benachbarter Stapel (23a, 23b) beabstandet ist, und so, dass eine Mehrzahl an Durchgängen (7) für ein Kühlfluid zwischen ihnen gebildet ist, wobei die gewellte Schicht (42, 52) eine erste Lamelle (221, 521) umfasst, die in einer solchen Weise verformt ist, dass auf ihrer Oberfläche eine Mehrzahl von ersten Einbuchtungen (222, 522) definiert ist, wobei die gewellte Schicht (42, 52) eine dritte Lamelle (421, 531) umfasst, die in einer solchen Weise verformt ist, dass auf ihrer Oberfläche eine Mehrzahl von dritten Einbuchtungen (422, 532) definiert ist, **dadurch gekennzeichnet, dass** die ersten und die dritten Einbuchtungen (222, 422, 532) entgegengesetzte Konvexitäten aufweisen, wobei die dritte Lamelle (421, 521) gegenüber der ersten Lamelle (221, 521) angeordnet ist, so dass jede dritte Einbuchtung (422, 532) an einer entsprechenden ersten Einbuchtung (222, 522) anliegt.

3. Eine Komponente (2, 3, 4, 5, 6) für eine elektrische Maschine nach Anspruch 1, **dadurch gekennzeichnet, dass** die gewellte Schicht (42, 52) ferner eine dritte Lamelle (421, 521) umfasst, die in einer solchen Weise verformt ist, dass auf ihrer Oberfläche eine Mehrzahl von dritten Einbuchtungen (422, 532) definiert ist, wobei die dritten und ersten Einbuchtungen (422, 532; 222, 522) entgegengesetzte Konvexitäten aufweisen, wobei die dritte Lamelle (421, 521) gegenüber von der ersten Lamelle (221, 521) angeordnet ist, so dass jede dritte Einbuchtung (422, 532) an einer entsprechenden ersten Einbuchtung (222, 522) anliegt.

4. Die Komponente (2, 3, 4, 6) nach einem der vorhergehenden Ansprüche, wobei die Einbuchtungen (222, 322, 422) längsgerichtete Kanäle (222, 322, 422) umfassen.

5. Die Komponente (2, 3, 4, 6) nach einem der vorhergehenden Ansprüche, wobei die längsgerichteten Kanäle (222, 322, 422) einen im Wesentlichen rechteckigen und/oder trapezförmigen Querschnitt aufweisen.

6. Die Komponente (5, 6) nach Anspruch 3, wobei die Einbuchtungen (522, 532) Vertiefungen (522, 532) umfassen.

7. Die Komponente (5, 6) nach einem der vorhergehenden Ansprüche, wobei jede Vertiefung (522, 532) hohl ist und eine Öffnung (5221) umfasst, wobei die Öffnung (5221) ausgestaltet ist, um den Durchgang des Kühlmittels innerhalb der Vertiefung (522, 532) zuzulassen.

8. Die Komponente (2, 3, 4, 5, 6) nach einem der vorhergehenden Ansprüche, wobei die gewellte Schicht (22, 32, 42, 52, 62) mittels eines Formungsprozesses erhalten wird.

9. Die Komponente (2, 3, 4, 5, 6) nach einem der vorhergehenden Ansprüche, wobei der Formungsprozess ein Hydroformungsprozess ist.

10. Eine Elektrische Maschine, **dadurch gekennzeichnet, dass** sie eine Komponente (2, 3, 4, 5, 6) gemäß einem der vorhergehenden Ansprüche umfasst.

## Revendications

1. Composant (2, 3, 4, 5, 6) pour machine électrique, comportant une pluralité de feuilletages empilés (21), au moins une couche ondulée (22, 32, 42, 52, 62) étant interposée entre une paire de piles adjacentes (23a, 23b), de telle façon que ladite paire de piles adjacentes (23a, 23b) soit espacée et de telle façon qu'une pluralité de passages (7) pour un fluide de refroidissement soit formée entre celles-ci, la couche ondulée (22, 32, 42, 52, 62) comportant un premier feuilletage (221, 521, 621) déformé de manière à définir sur sa surface une pluralité de premiers renfoncements (222, 522), la couche ondulée (32, 42, 52, 62) comportant un deuxième feuilletage (321, 421, 531) qui est déformé de manière à définir sur sa surface une pluralité de deuxièmes renfoncements (322, 422, 532) **caractérisés en ce que** lesdits premiers et deuxièmes renfoncements (222, 322) présentent des concavités alignées, ledit deuxième feuilletage (321) étant disposé adjacent audit premier feuilletage (221) de telle façon que chaque deuxième renfoncement (322) soit au moins partiellement logé dans un premier renfoncement (222) correspondant.

2. Composant (4, 5) pour machine électrique, comportant une pluralité de feuilletages empilés (21), au moins une couche ondulée (42, 52) étant interposée entre une paire de piles adjacentes (23a, 23b), de telle façon que ladite paire de piles adjacentes (23a, 23b) soit espacée et de telle façon qu'une pluralité de passages (7) pour un fluide de refroidissement soit formée entre celles-ci, la couche ondulée (42, 52) comportant un premier feuilletage (221, 521) déformé de manière à définir sur sa surface une pluralité de premiers renfoncements (222, 522), la couche ondulée (42, 52) comportant un troisième feuilletage (421, 531) qui est déformé de manière à définir sur sa surface une pluralité de troisièmes renfoncements (422, 532), **caractérisés en ce que** lesdits premiers et troisièmes renfoncements (222, 422, 532) présentent des convexités opposées, ledit troisième feuilletage (421, 521) étant disposé en face dudit premier feuilletage (221, 521) de telle façon que chaque troisième renfoncement (422, 532) prenne appui sur un premier renfoncement (222, 522) correspondant.

3. Composant (2, 3, 4, 5, 6) pour machine électrique selon la revendication 1, **caractérisé en ce que** ladite couche ondulée (42, 52) comportant en outre un troisième feuilletage (421, 521) déformé de manière à définir sur sa surface une pluralité de troisièmes renfoncements (422, 532), lesdits troisièmes et premiers renfoncements (422, 532 ; 222, 522) présentant des convexités opposées, ledit troisième feuilletage (421, 521) étant disposé en face dudit premier feuilletage (221, 521) de telle façon que chacun desdits troisièmes renfoncements (422, 532) prenne appui sur un premier renfoncement (222, 522) correspondant.

4. Composant (2, 3, 4, 6) selon la revendication précédente, lesdits renfoncements (222, 322, 422) comportant des conduits longitudinaux (222, 322, 422).

5. Composant (2, 3, 4, 6) selon la revendication précédente, lesdits conduits longitudinaux (222, 322, 422) présentant une section sensiblement rectangulaire et/ou trapézoïdale.

6. Composant (5, 6) selon la revendication 3, les renfoncements (522, 532) comportant des cuvettes (522, 532).

7. Composant (5, 6) selon la revendication précédente, chaque cuvette (522, 532) étant creuse et comportant une ouverture (5221), l'ouverture (5221) étant configurée pour permettre le passage du refroidissement à l'intérieur de ladite cuvette (522, 532).

8. Composant (2, 3, 4, 5, 6) selon l'une quelconque des revendications précédentes, ladite couche ondulée (22, 32, 42, 52, 62) étant obtenue par un processus de formage.

9. Composant (2, 3, 4, 5, 6) selon les revendications précédentes, le processus de formage étant un processus d'hydroformage.

10. Machine électrique, **caractérisée en ce qu'**elle comporte un composant (2, 3, 4, 5, 6) selon l'une quelconque des revendications précédentes.
